# EUROPEAN PATENT APPLICATION

(11) **EP 1 280 325 A1**
(43) Date of publication of application: **29.01.2003**
(21) Application number: 01921801.5
(22) Date of filing: 10.04.2001
(51) Int. Cl.: H04M 3/42, H04M 3/53, H04M 1/64, H04M 11/00

(54) **RESPONDING DEVICE, AND COMMUNICATION EQUIPMENT COMMUNICATING WITH IT, AND RECORDING MEDIUM RECORDING ITS PROGRAM AND PROGRM**

(30) Priority: 14.04.2000 JP 2000114294
(71) Applicant: Sharp Kabushiki Kaisha, Osaka-shi, Osaka 545-8522 (JP)
(72) Inventor: MATSUYAMA, Tetsuya, Yamatokoriyama-shi, Nara 639-1008 (JP)
(74) Representative: Müller - Hoffmann & Partner
(86) International application number: JP0103106
(87) International publication number: WO01084813

(57) **Abstract**

When a terminal equipment (4) cannot receive a call from a call-out terminal equipment (2, 6), detection means (53) of an automatic answering server (5) inquires the call-out terminal equipment (2, 6) if an animation display function is provided. Upon receiving the inquiry, the terminal equipment (2) provided with the animation display function transmits as a response an animation displayable notice referring to a memory section (24). In this case, a search section (54) of the automatic answering server (5) reads out a response animation from a memory section (52), and transmits the response animation as read to the terminal equipment (2). On the other hand, the terminal equipment (6) without the animation display function cannot transmit the above notice, and the search section (54) therefore reads out the voice response message from the memory section (52) and transmits the voice response message as read to the terminal equipment (6). As a result, in a communication system wherein both an equipment with a display function and an equipment without a display function can be connected to a communication network, a responder which permits the image response message and the voice response message to be transmitted without unnecessary increasing an amount of data to be transmitted within the communication network can be realized. The troublesome work for reconnection can be saved, and it is not necessary to learn new operations for receiving an image response message.

## Description

### TECHNICAL FIELD

The present invention relates to a responder such as an answering machine, etc., which is capable of transmitting a response message to a call-out equipment, when a calling is made from the call-out equipment to a receiving equipment, and to a communication device to be communicated with the responder, and more particularly relates to a responder capable of transmitting an image response message and a voice response message without unnecessary increasing an amount of data to be transmitted in a communication network, and to a communication device to be communicated with the responder.

### BACKGROUND OF THE INVENTION

In certain circumstances, a user is not able to answer a telephone machine when receiving a call, for example, in his/her absence. For such circumstances, an automatic answering machine capable of responding the call in behalf of the user has answering machine include an automatic answering machine built in a telephone machine wherein when nobody picks up the telephone after a predetermined number of calls, a pre-recorded particular message is to be reproduced. Then, the telephone machine is set in a recording mode to be ready for recording a voice message as received from the call-out equipment.

In the case of portable telephones, an automatic answering server is provided on a side of a center which controls a telephone line, and when the receiving portable telephone cannot answer the call, the automatic answering server reproduces a predetermined message, and records a voice message from the call-out equipment.

Further, for example, Japanese Laid-Open Patent Publication No. 10-215309/1998 (Tokukaihei 215309/1998, published on August 11, 1998) discloses a radio station device wherein a voice response message is stored for each calling party number, and a voice response message corresponding to the calling party number as informed when receiving a call is transmitted to the call-out equipment.

However, the foregoing conventional structure is not designed for a telephone provided with a moving image display function such as animation, etc. Therefore, irrespectively of that the calling telephone machine is capable of transmitting advanced information using animation or the like, the foregoing portable telephone or other receiving equipment can respond only with a voice response message, and cannot respond by transmitting advanced information.

On the other hand, for example, Japanese Laid-Open Patent Publication No. 2000-59857 (Tokukai 59857/2000 published on February 25, 2000) discloses an image communication device, which permits mutual communications with images, wherein when the user of the answering equipment cannot answer the call, the image communication device answers the call with images. However, in contrast to the previous conventional structure, the above structure is not designed in consideration of the case of transmitting a call from the telephone machine, which is not provided with a display function, and as such telephone machine cannot reproduce a response message properly, the data for response with images are transmitted wastefully.

### DISCLOSURE OF THE INVENTION

The present invention is achieved in finding a solution to the foregoing problem, and it is therefore an object of the present invention to provide a responder capable of transmitting both an image response message and a voice response message without unnecessary increasing an amount of data to be transmitted in a communication network, and to a communication device to be communicated with the responder in a communication device wherein both an equipment with a display function and an equipment without a display function can be connected to a communication network.

In order to achieve the above object, the responder in accordance with the present invention, which includes acceptance means for accepting a call from a call-out equipment in a predetermined receiving equipment, and a response means capable of transmitting a voice response message to the call-out equipment when the call is accepted, is characterized in that when the call-out equipment is provided with a display function, the responder transmits an image response message to the call-out equipment instead of, or in addition to the voice response message. In this structure, the receiving equipment may be a responder itself, or a user's terminal equipment in the case where the responder is an automatic answering server, etc., separately provided from the responder. The acceptance means may be arranged so as to accept a call by supervising a call to each receiving equipment, or to receive a call to the receiving equipment from a communication network, for example, by transferring. Further, the image response message is not limited to animation, and may be a moving image or a static image.

With the foregoing structure, when the acceptance means accepts the call from the call-out equipment to the receiving equipment, the response means, for example, determines a display ability of a call-out equipment, for example, based on a voluntary notice given from the call-out equipment or the inquiry to the call-out equipment, and when the call-out equipment is provided with the display function, the responder transmits an image response message including a moving image such as animation or a static image instead of or in addition to the voice response message. On the other hand, when it is determined that the call-out equipment is not provided with the display function, for example, by receiving a response or notice indicative of that the call-out equipment is not provided with the display function, or the case of failing to receive a response or a notice indicative of that the display function is provided, the responder transmits the voice response message to the call-out equipment.

According to the foregoing structure, in the communication system wherein both the equipment provided with the display function and the equipment without being provided with the display function can be connected to the communication network, the responder can transmit the response animation only to the terminal equipment provided with the display function. As a result, as compared to the case of transmitting the image response message to all the call-out equipments, more advanced data transmission is enabled by responding with the image response message only to the call-out equipment provided with the display function without unnecessary increasing the amount of data to be transmitted in the communication network.

Further, irrespectively of with or without the display function, the call-out equipment can receive a response message according to the display ability only by calling the receiving equipment. Therefore, in order to receive the voice response message, it is connected to the voice response message like the answering telephone, and unlike the case where the response animation is connected to the image response device to receive the image response message, the burden for the reconnection as well as the burden for newly storing the operation for receiving the image response message can be reduced.

Here, in the case of the telephone system provided with the automatic answering machine, when the receiving terminal cannot receive or respond, a response message is transmitted. Therefore, when adopting the structure wherein the image response device and the voice response device are provided separately, it is required to confirm the answering machine serving as the voice response device if it can receive/transmit a message, and then to connect to the image response device again as necessary. In view of the foregoing, as in the present embodiment, in the case where the responder determines the display ability of the call-out equipment, it is not required to be connected to the image response device again. Therefore, the response message according to the display function can be received by merely calling the receiving equipment. As a result, a troublesome work for connecting to the image response device again can be saved significantly.

The foregoing responder may be arranged so as to further include: inquiry means for making an inquiry to the call-out equipment itself or a server which stores beforehand the display ability of each call-out equipment about a display ability of the call-out equipment when the acceptance means accepts the call, wherein when the call-out equipment is provided with a display function, the response means transmits an image response message to the call-out equipment instead of or in addition to the voice response message. It may be further arranged such that when the acceptance means of the responder accepts the call, the acceptance means also receives data indicative of the display ability as being informed from the call-out equipment, and upon receiving the data indicative of that the display function is provided, the response means determines that the call-out equipment is provided with the display function.

The responder having the foregoing structure transmits a response message according to the display ability of the call-out equipment. Therefore, in the case where the call-out equipment is held with its speaker at one's ear during conversations, and the display screen cannot be seen by the user, like the case of carrying a portable telephone, the user of the call-out equipment may not notice the image response message.

Therefore, it is desirable that the responder having the foregoing structure be further arranged such that when transmitting the image response message, the response means informs the call-out equipment of the image response message by transmitting thereto a predetermined voice notice message.

According to the foregoing structure, when an image response message is to be transmitted by the response means, the call-out equipment is informed of a voice notice message. As a result, when the call-out equipment provided with a function of reproducing a voice message is carried with a display screen unseen, the user of the call-out equipment can be surely informed of the transmission of an image response message, thereby preventing the user from remaining the receipt of the image response message unnoticed.

The responder having the foregoing structure may be further arranged such that when transmitting the image response message, the response means confirms the call-out equipment if it is set to accept the image response message, and transmits the image response message only when the call-out equipment is set so.

According to the foregoing structure, when the image response message is to be transmitted, the response means confirms if the call-out equipment is set to accept the image response message, and the image response message is transmitted only when the call-out equipment is set so, and therefore, the image response message can be transmitted only to the communication network when the call-out equipment is necessary. As a result, a number of times of transmitting a response animation, which takes time for transmitting and reproducing as compared to a voice response message, can be reduced, and a burden of the communication network can therefore be reduced.

The responder having the foregoing structure may be further arranged such that when transmitting an image response message, selection means for selecting an image response message to be used for a response to a currently received message among predetermined image response messages based on a result of selection made by a user of the receiving equipment, wherein the response means transmits to the call-out equipment an image response message as instructed by the selection means among the plurality of image response messages.

According to the foregoing structure, when the acceptance means accepts the call, the selection means of the responder determines an image response message for use in a current response based on a result of selection made by a user of the receiving equipment. Incidentally, in the case where the receiving equipment is the responder itself, the selection means offers options using the display screen or with voice messages and urges the user to select one of the options. In the case where the responder and the receiving equipment are separately provided, the selection means communicates with the receiving equipment, and receives the result of selection made by the user of the receiving equipment. In any case, the response means transmits the image response message as selected to the call-out equipment. As a result, as compared to the case of selecting a single image response message beforehand, an image response message more suited for the user of the receiving equipment at the time of receiving a call can be transmitted.

The responder of the foregoing structure may be the receiving equipment itself, or may be provided separately from the receiving equipment. Further, in the case where the responder is the receiving equipment itself, and is provided with the selection means, the display means for selecting an image response message to be responded by displaying an image indicating the image response message to the user. Incidentally, as long as each image response message can be identified, the image may be an image response message itself, or a characteristic frame of a moving image as the image response message.

According to the foregoing structure, when the selection means offers an image response message based on the result of selection made by the user, the display means displays an image indicative of each image response message to urge the user to select the image response message to be responded.

Here, in order to be applicable to a variety of situations, as the number of the image response messages subjected to selection increases, it becomes more difficult to remember each image response message. In this case, it is therefore more desirable to offer the user options. On the other hand, when the user of the receiving equipment can respond the call, the user should respond the call. In some cases, the user can receive a call but cannot respond to the call, for example, during a meeting, or in the means of transportation. Under such circumstances, it is difficult to provide options by a voice message, or an instruction by a voice message. In response, according to the structure of the present embodiment, options are displayed with images to urge the user to select. Therefore, even under such circumstances that it is difficult to provide options by a voice message, or an instruction by a voice message, it is possible to urge the user to select by providing each image response message without problem. Here, both the image to be provided and the image respond message are image data, and therefore each image response message can be provided more accurately, and the user can select an image response message more accurately as compared to the case of adopting other expression method using voice or characters, etc.

The responder is an automatic answering server which transmits a voice response message or an image response message to the call-out equipment instead of the receiving equipment when the receiving equipment cannot receive or respond a call, and the responder may be arranged so as to include the following means: voice message memory means for storing a voice response message by making an association beforehand with the receiving equipment; image message memory means for storing an image response message by making an association beforehand with the receiving equipment; and response instruction means for instructing the response means to respond when the receiving equipment provided with the acceptance means for accepting the call cannot receive or respond a call, instructs the responder to respond. Further, the acceptance means is ready to be connected to the communication network any time, and the response means makes an access to the voice message memory means when transmitting the voice response message, and makes an access to the image message memory means when transmitting the image response message, in order to read out the response message related to the receiving equipment which accepts the call, and transmit the response message as read to the call-out equipment. Incidentally, as long as each memory means outputs an image response message or a voice response message in association with the receiving equipment, the memory means may be arranged so as to store the image response message or the voice response message itself, data indicative of the storage place of each image response message, or a preparation system or a preparation method of a response message when the response message can be prepared by a predetermined formula or system.

According to the foregoing structure, when the acceptance means accepts the call from the call-out equipment provided with the display function to the receiving equipment, the response means reads out an image response message stored in association with the call-out apparatus from the image message memory means and transmit the response message as read to said call-out equipment. On the other hand, for the receiving equipment without being provided with the display function, the response means reads out a voice response message as stored in association with the call-out apparatus from the voice message memory means.

According to the foregoing structure, each response message is stored in association with the call-out terminal equipment. Therefore, even when a plurality of users (users of the receiving equipment) use an automatic answering server in common, it is possible to transmit a response message according to each user to the call-out equipment. Further, irrespectively of wired or wireless connection, the acceptance means can be connected to the communication network any time, by providing the means in the region of communication range, it is possible to respond the call without problem when the receiving equipment is moved to the outside of the communication range, or the power is switched off, etc.

When responding, the image response message and the voice response message are transmitted from the response means to the communication network without being transmitted between the receiving equipment and the communication network. Therefore, even when an amount of data to be transmitted is limited as in the case of connecting the receiving equipment to the communication network by wireless, the image response message and the voice response message can be transmitted without applying burden to the communication network. Incidentally, as compared to the receiving equipment, the responder is provided in a small number, and is not moved. Therefore, as compared to the case of increasing an amount of transmission between the receiving equipment in a place selected at random, it is easy to increase an amount of transmission between the responder and the communication network.

A communication device in accordance with the present invention capable of communicating with a responder via a communication network as a receiving equipment is characterized by including display means for displaying an image indicative of each image response message to a user and selecting an image response message to be responded, and instruction means for indicating a result of selection to the selection means.

According to the foregoing structure, the display means of a communication device displays an image indicative of predetermined plurality of image response messages, and urges the user to select the image response message to be responded. Further, the instruction means of the communication device informs the selection means of the responder of the results of selection. As a result, an image response message as selected is transmitted from the responder to the call-out equipment.

According to the foregoing structure wherein the responder is a receiving apparatus, as in the structure provided with the selection means and the display means, an image response message for a user of the receiving equipment at the time of receiving the call can be transmitted. In response, according to the structure of the present embodiment, options are displayed with images to urge the user to select. Therefore, even under such circumstances that it is difficult to provide options by a voice message, or an instruction by a voice message, it is possible to urge the user to select by providing each image response message without problem. Here, both the image to be provided and the image respond message are image data, each image response message can be provided more accurately, and the user can therefore select an image response message more accurately.

By the way, the responder may be realized by a hardware, or by executing a predetermined program using a computer. When the program, for example, as tread from a recording medium is executed by the computer, the computer operates as the responder. As a result, in the communication system wherein both an equipment with a display function and an equipment without a display function can be connected to the communication network, by responding only to the call-out equipment with the display function with an image response message without unnecessary increasing an amount of data to be transmitted in the communication network, more advanced data transmission can be realized without unnecessary increasing an amount of data to be transmitted in the communication network. Incidentally, irrespectively of the display ability, only by calling out the receiving equipment by the call-out equipment, it is possible to receive a response message according to the display ability, and therefore, a troublesome task for the reconnection can be reduced, and a burden for learning a new operation of receiving an image response message can be reduced.

For a fuller understanding of the nature and advantages of the invention, reference should be made to the ensuing detailed description taken in conjunction with the accompanying drawings.

### BRIEF DESCRIPTION OF THE DRAWINGS

Figure 1, which shows one embodiment of the present invention, is a block diagram illustrating essential parts of a communications system.
Figure 2 is a flowchart showing operations of the communications system when an answering function is set ON.
Figure 3 is an explanatory view illustrating a connected state when the answering function is set ON in a communications system.
Figure 4 is a flowchart illustrating operations when registering a response message in the communications system.
Figure 5 is an explanatory view illustrating a connected state when registering a response message in the communications system.
Figure 6, which shows another embodiment of the present invention, is a block diagram illustrating essential parts of the communications system.
Figure 7 is a flowchart illustrating operations when the answering function is set ON in the communications system.
Figure 8 is a block diagram illustrating essential parts of communications system in accordance with still another embodiment of the present invention.
Figure 9 is a flowchart illustrating operations when the answering function is set ON in the communications system.
Figure 10, which shows still another embodiment of the present invention, is a block diagram illustrating essential parts of the communications system.
Figure 11 is a flowchart illustrating operations when the answering function is set ON in the communications system.
Figure 12, which illustrates another embodiment of the present invention, is a block diagram illustrating essential parts of the communications system.
Figure 13 is a flowchart illustrating operations of the communications system when an answering function is ON.
Figure 14, which shows still another embodiment of the present invention, is a block diagram illustrating essential pants of communications system.
Figure 15 is a flowchart illustrating operations of the communications system when an answering machine is set ON.
Figure 16, which illustrates still another embodiment of the present invention, is a flowchart illustrating operations of the communications system in accordance with still another embodiment of the present invention.

### DESCRIPTIONS OF THE PREFERRED EMBODIMENTS OF THE PRESENT INVENTION

The present invention will be explained in details through the following examples and comparative examples; however, the present invention is not intended to be limited to examples and comparative examples.

### [FIRST EMBDOIMENT]

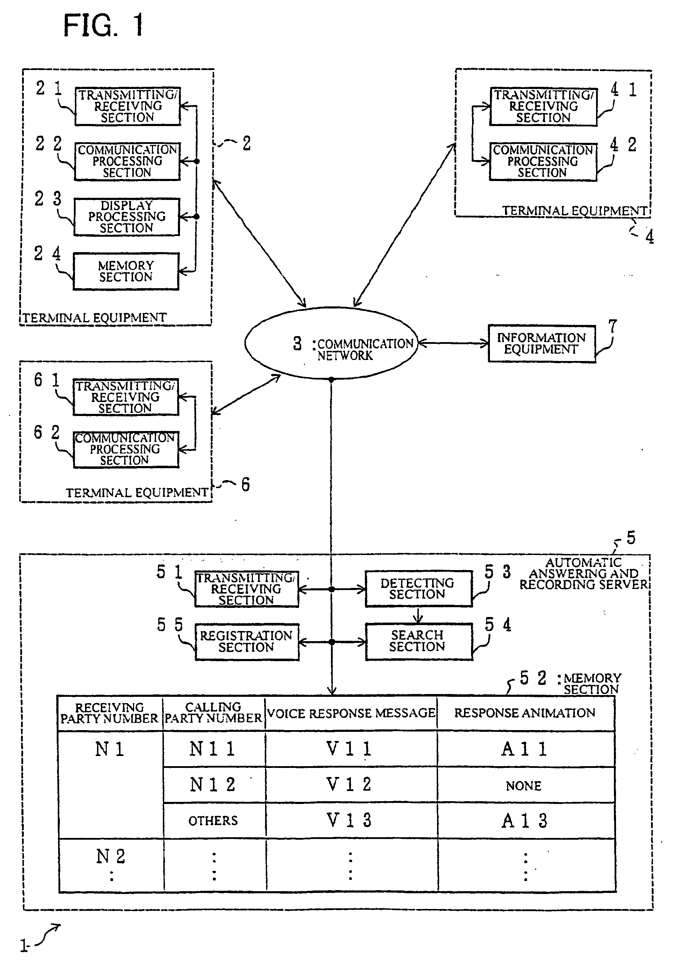

The following descriptions will be explained through one embodiment of the present invention in reference to Figure 1 through Figure 5. As illustrated in Figure 1, the communications system 1 in accordance with the present invention is capable of transmitting, for example, animated data, in addition to normal communications in voice message includes a terminal equipment 2(6) as a call-out equipment, a receiving terminal equipment 4 which can communicate with the terminal equipment 2, which receives a calling of the terminal equipment 2(6) via a communication network 3 such as a public telephone line network or bucket network, etc., and an automatic answering server (responder) 5, which transmits a response animated data or voice response message to the call-out terminal equipment 2(6). As a result, with the communications system 1 wherein both of the terminal equipment 2, which can display the animated data, and the terminal equipment 6, which cannot display, are capable of calling out responds a response message according to the display ability of the terminal equipment 2(6) on the communication network 3. Incidentally, the present invention is applicable to not only wireless communication network, and fixed line communication network. In the following, explanations will be given through the case where the present invention is applied to the portable telephone system of the present invention. The examples of the display ability of the present invention include: with/without a display function, a number of pixels of a display screen, a number of gradations, tones, computing ability, displayable figure color, etc. In the following, explanations will be given through the case with or without the animated data display function.

Specifically, between the call-out terminal equipments 2 and 6, the terminal equipment 6, which cannot display the animated data, includes: a transmitting/receiving section 61 which can be connected to the communication network 3 by communicating with, for example, a base station (not shown), and a communication processing section 62 which is capable of processing voice conversation. For example, by transmitting the connected request including a desired telephone number to the communication network 3, the equipment of the corresponding telephone number is called by transmitting the connection request including a desired telephone number to the communication network 3, and the apparatus is connected in line with the terminal equipment 6 by the communication network 3, mutual voice conversations with the apparatus can be realized.

On the other hand, in addition to the transmitting/receiving section 21 and the communications processing section 22 having the same structures as the transmitting/receiving section 61 and the communications processing section 62, the terminal equipment 2 which is capable of displaying animated data is provided with a display processing section 23 which can display animated data to a liquid crystal panel, etc. Not only the voice communications with the terminal equipment 6, the receiving equipment can communicate with the animated data by displaying animated data received by the transmitting/receiving section 21 or the animation prepared by itself can be displayed in the display processing section 23 as long as a receiving equipment corresponds to the animated data. Incidentally, the transmission of the animated data, for example, transmits and receives via packet network simultaneously with the line connection for communications via the packet network simultaneously with the line connection for communication, or may be transmitted by supervising as a high frequency component with the voice transmitted by the communication line.

The terminal equipment 2 further includes a memory section 24 which stores data if the animated data can be received by itself, and the data for use in reproducing animated data. In response to a request from the automatic answering server 5 (to be described later), the transmitting/receiving section 21 transmits/receives data of the memory section 24 and informs the animated display ability.

Incidentally, the receiving terminal equipment 4 may be provided with the animated display function, or be provided with the transmitting/receiving section 41 and the communications processing section 42 as well as the terminal equipment 6 without being provided with the display function.

On the other hand, the automatic answering server 5 includes: a) the transmitting/receiving section 51 (receiving means; response instruction means) which can be connected to the communication network 3 any time, and b) a memory section (image message memory means and voice message memory means) which stores voice response message and response animation as a response message to be transmitted to the receiving side, c) a detecting section (inquiry means) 53 which inquires the call-out terminal equipment 2(6) when the transmitting/receiving section 51 from the communication network 3 is in the state where the receiving terminal equipment 4 cannot receive a call and detect if the animated data display ability is provided with when the receiving terminal equipment 4 cannot call out by searching the memory section 52 based on the results of detection. The transmitting/receiving section 51 includes a search section (response means) 54 which obtains a response message which the transmitting/receiving section 41 transmits to the terminal equipment 2(6).

The communication network 3 in accordance with the present embodiment is capable of informing a receiving party number when accepting a call, and the automatic answering server sets a response animation and a voice response message to each calling party number. Specifically, in the memory region of the memory section 52, the memory region U1 provided for each number of a user stores a calling party number in combination with a voice response message when receiving a calling party number and a response animation. Further, the search section 54 searches the number of the user (receiving party number), the number of the calling party (transmitting end), and searches the memory section 52 based on whether or not the animation display ability is provided, and the response message to be transmitted is specified. Further, to be ready for receiving a call-out from the unregistered number (in other cases), the voice response message and the response animation in other cases can be stored, and in the case where the combination of the number of the user which detects the call-out and the calling party number is not registered, from the voice message and the response animation in other cases the response message to be transmitted can be specified whether or not the display message to be transmitted can be specified depending on whether or not the display ability is provided.

Incidentally, the storing method of the response animation stores the bit map based on each frame which constitutes the response animation. In this case, the bit map is transmitted from the automatic answering server 5 to the terminal equipment 2, and the display processing section 23 of the terminal equipment 2 sequentially displays the bit map in order and reproduces the animation.

When storing the response animation, the graphic elements of circular, square, or character in shape, etc., are combined, a characteristic key frame of each frame may be described. In this case, the display processing section 23 of the terminal equipment 2 interpolates the frame between the key frames as necessary, and the frame is generated. Further, by describing the graphic element which constitutes each frame, the response animation is reproduced. In this case, by interpolating the graphic elements so as to smoothen the differences in position, color, etc., among the corresponding graphic elements, a more appropriate interpolation can be realized. The interpolating process is performed by the automatic answering server 5 which can afford the relative arithmetic ability by the terminal equipment 2, and the burden of the terminal equipment 2 can be still reduced.

Further, as another storing method, the animation of the operation by the corresponding character is stored for each of the plurality of characters, and each response animation can be stored in combination with the operation. In this case, the data indicative of the combination of the character operation and at least animation of the operation are transmitted to the terminal equipment 2 from the automatic answering server 5, and the display processing section 23 of the terminal equipment 2 reproduces the response animation by reproducing according to the combination of animation of each operation. In the case of storing the method, the animation can be specified with the combination of the animation and the operation of the character, and thus the burden in the preparation of the animation can be reduced.

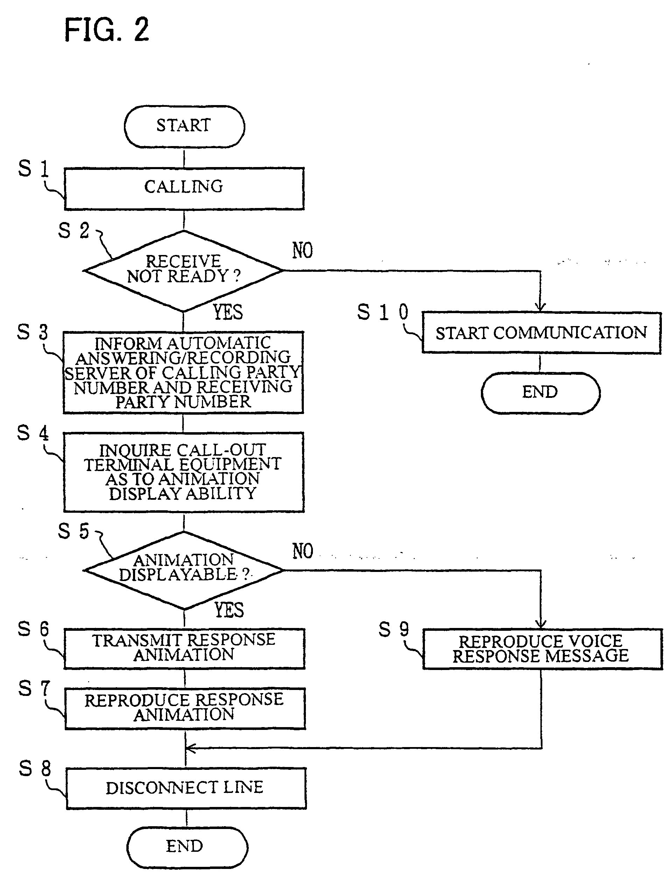

In the communication system 1 of the above structure, the operation of each section when response will be explained based on Figures 2 to 5. Namely, in the Step 1 (hereinafter referred to as S1), the transmitting/receiving section of the call-out terminal equipment 2 transmits a connection request to the telephone number of the receiving terminal equipment 4, and the terminal equipment 4 calls out. Then, the communication network 3 detects if the terminal equipment 4 is not able to receive a call based on whether or not the communication network 3 can communicate with the terminal equipment 4 in S2.

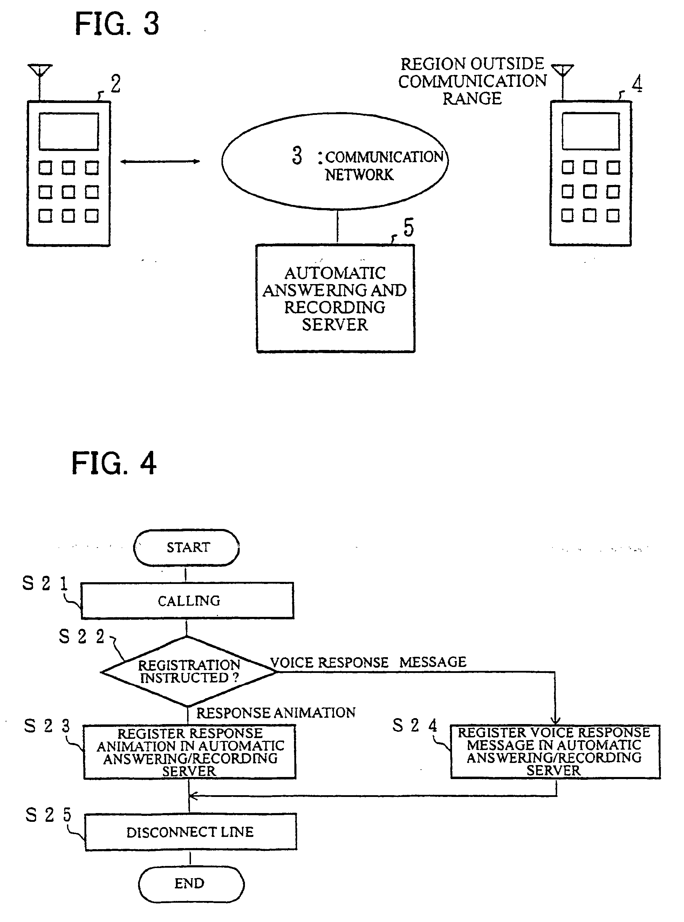

For example, as illustrated in Figure 3, in the case where the terminal equipment 4 is in the region outside the communication range, or the power supply is disconnected, or other cases where the terminal equipment cannot receive a call (YES in the Step S2), the communication network 3 informs the calling party number and a receiving party number to the transmitting/receiving section 51 of the predetermined automatic answering server 5 (S3).

On the other hand, in the automatic answering server 5, the detecting section 53 inquires the call-out terminal equipment 2 as to the display ability of the animation, for example, so as to transmit the predetermined inquiry data to the calling party number as informed (S4).

Here, in the above example, the terminal equipment 2 can display the animation, and in the memory section 24 of the terminal equipment 2, the data indicative of that the animation can display is stored. Therefore, upon receiving an inquiry, the transmitting/receiving section 21 of the terminal equipment 2 informs the automatic answering server 5 that the animation can be displayed, for example, by reading the data from the memory section 24 and responding to the automatic answering server 5.

Further, in the case where the transmitting/receiving section 51 is informed from the terminal equipment 2 that the animation can be displayed in the automatic answering server 5 (YES in S5), the search section 54 searches the memory section 52 based on the calling party number and the receiving party number (the number of the user) as received in S3 and the animation displayable notification as received in S5, and the transmitting/receiving section 51 transmits a response animation to the call-out terminal equipment 2 (S6).

For example, when receiving in S3, the number of the user N1 and the calling party number N11, the search section 54 receives the response animation A11 from the memory section 52. Further, in the case where the number of the user N1 and the calling party number N13 are received, and the combination of these numbers is not stored in the memory section 42, the response animation A13 as related to other is obtained, and is transmitted to the terminal equipment 2.

In the terminal equipment 2, when the transmitting/receiving section 21 receives the response animation, the display processing section 23 reproduces the response animation (S7). As a result, the terminal equipment 2 which can display the animation can receive the response message of the animated data, which provides more advanced communications as compared to the case where the voice message can respond. Incidentally, upon completing the transmission of the response animation, in S8, the line connection between the automatic answering server 5 and the terminal equipment 2 cuts off, and the communication network 3 is switched to be ready for the new calling.

On the other hand, in the case where the terminal equipment 6 cannot display the animation, in response to the inquiry in S4, the terminal equipment 6 cannot transmit the animation responsible notification. Therefore, in S5, the detecting section 53 of the automatic answering server 5 determines that the terminal equipment cannot display the animation based on the fact that the transmiting/receiving section 51 cannot receive the notification within predetermined hours from the transmission of the inquiry. Further, in S9, the search section 54 searches the memory section 52, and obtains the voice response message indicative of that the animation cannot display corresponding to the number of the user and the calling party number, and then informs the terminal equipment 6 of the voice response message as in the normal conversation. For example, in the case where the call-out terminal equipment is not provided with the animation display function for the combination of the number of the user N 1 and the calling party number N11, the automatic answering server 5 reproduces the voice response message V11.

Incidentally, even in the case where the terminal equipment 2 can display animation, as in the combination of the number of the user N1 and the calling party number N12, if the response animation is not registered in the memory section 52 and only the voice response message is registered, the automatic answering server 5 performs the process in S9 in replace of the processes in S6 and S7, and transmits the voice response message as a response message.

Incidentally, irrespectively of whether or not the call-out terminal equipment can display animation, the receiving terminal equipment 4 accepts a call or responds (NO in S2), in S10, the communication network 3 performs normal conversation between the communication processing sections 42 and 22 (62) of the terminal equipments 4 and 2(6) by connecting the call-out terminal equipment 2(6) and the receiving terminal equipment 4.

As described, according to the communications system 1 in accordance with the present embodiment, the automatic answering server inquires the call-out terminal equipment 2(6) if the animation can display, and if the animation cannot be displayed, the voice response message is transmitted; on the other hand, if the animation can be displayed, the animation is transmitted. As a result, in the communication system 1 wherein both the terminal equipment 2 provided with the display function and the terminal equipment 6 without being provided with the display function can be connected to the communication network 3, the automatic answering server 5 can transmit the response animation only to the terminal equipment 2 provided with the display function. As a result, as compared to the case of transmitting the response animation to all the call-out terminal equipment 2(6), more advanced data transmission is enabled only to the call-out terminal equipment 2 provided with the display function in response to response animation without unnecessary increasing the amount of data to be transmitted in the communication network 3.

Further, irrespectively of with or without the display function, the terminal equipment 2 (6) on the calling side becomes capable of receiving a response message according to with/without the display function only by calling the receiving terminal equipment by the call-out terminal equipment 2(6). Therefore, in order to receive the voice response message, it is connected to the voice response message like the answering telephone, and unlike the case where the response animation is connected to the image response device to receive the response animation, the burden for the reconnection as well as the burden for newly storing the operation for receiving the response animation can be reduced.

In the present embodiment, in the case of the automatic answering/recording telephone system, when the receiving terminal equipment cannot receive or respond, a response message is transmitted. Therefore, when adopting the structure wherein the image response device and the voice response device are provided separately, it is required to confirm the answering machine serving as the voice response device if it can receive/transmit a message, and then to connect to the image response device again as necessary.

In view of the foregoing, as in the present embodiment, by arranging such that the automatic answering server 5 transmits the response animation or the voice response message according to a response to the inquiry, I is not necessary to the image response device again, and it is possible to receive a response message according to the function, i.e., whether the display function is provided or not merely by calling the call-receiving side terminal equipment 4. As a result, a troublesome work for connecting to the image response device again can be saved significantly.

According to the communications system 1, the automatic answering server 5 can be always connected to the communication network 3, even when the terminal equipment 4 on the call receiving side cannot receive a call as being in the region outside of the communication range, for example, it is possible to transmit the response animation or voice response message without any trouble. Further, for the automatic answering server 5 and the communication network 3, a sufficient transmission capacity can be ensured, for example, by the wired line connection. With the foregoing structure, even when the receiving terminal equipment 4 and the communication network 3 are connected by the communications path whose transmission capacity is liable to be limited, such as a wireless communication path, animation can be transmitted without applying heavy load to the communications path. Here, the number of the communications paths between the automatic answering server 5 and the communication network 3 is significantly smaller than the number of the communications path between each terminal equipment 4 and the communication network 3, und thus the transmission capacity can be improved relatively with ease.

The explanations have been given through the case where the automatic answering server 5 transmits a response animation instead of the voice response message when the call-out terminal equipment 2 cannot display animation. However, as the call-out terminal equipment 2 is provided with the communications function, and a message is transmitted to communicate with the receiving terminal equipment 4, a response animation may be transmitted in addition to the voice response message.

Further, the automatic answering server 5 in accordance with the present embodiment is arranged so as to determine in S5 that the terminal equipment is not provided with the animation display function when a message indicative of that the animation response is permitted is not received from the call-out terminal equipment. However, the present invention is not intended to be limited to the foregoing structure, and it may be arranged so as to determine that the animation cannot be displayed when receiving a message indicative of that the animation response is not permitted (display incapability notification) from the call-out terminal equipment.

To carry out the determination based on the display incapability notification, however, all the terminal equipments which cannot display animation of the terminal equipments capable of transmitting a message are required to transmit the display incapability notification. It is therefore required to alter all the terminal equipements capable of communicating voice message, and vast job and cost are required. In contrast, according to the present embodiment, the terminal equipment is determined that the animation display is not permitted when the animation display capability notification cannot be received, and it is therefore possible to determine if the animation display is permitted without changing a conventional terminal equipment which permits only voice message communications.

The explanations have been given through the case where the response animation and the voice response message have been registered in the memory section 52. In the following, however, explanations will be given through the case of registering these response messages. Namely, as illustrated in Figure 1, the automatic answering server 5 in accordance with the present embodiment is provided with a registering section 55 for registering a response message in a memory section 52, in response to a request from an apparatus capable of communicating with the automatic answering server 5 such as the receiving terminal equipment 4, other information equipment 7, etc.

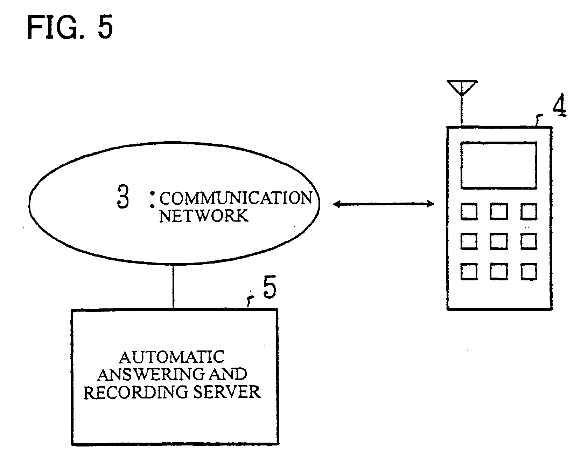

The explanations will be given through the case of registering the animation stored in the receiving terminal equipment 4. In S21 of Figure 4, the receiving terminal equipment 4 shown in Figure 5 calls out the automatic answering server 5, and informs a calling party number to the registering section 55 of the automatic answering server 5, for example, by combining a tone signal. Further, as a calling party number when calling out, a number of a user is informed in the registration section 55.

For example, upon receiving a message indicative of that the receiving terminal equipment 4 registers the response animation by a tone signal, etc. (in the case of response animation in S22), the registration section 55 of the automatic answering server 5 receives a response animation from the receiving terminal equipment 4, and the response animation corresponding to the combination of the user's number and the calling party number as received in S21 is stored in the memory section 52 (S23). On the other hand, when informing the registration of the voice response message (in the case of voice response message in S22), the registration section 55 records a voice message from the receiving terminal equipment 4 and stores the voice message in the memory section 52 as a voice response message corresponding to the combination of both numbers (S24). In any case, upon transmitting the response message to the automatic answering server 5, the line connection between the automatic answering server 5 and the receiving terminal equipment is cut off (S25).

Although explanations have been given through the case where the response animation is stored in the terminal equipment 4, the present invention is not intended to be limited to this. For example, in the case where the receiving terminal equipment 4 is provided with a camera, data stream indicative of a dynamic image taken by the camera may be transmitted as the response animation.

A plurality of response animation are stored in the memory section 52 of the automatic answering server 5, and the receiving terminal equipment 4 selects one of the response animations based on a combination of tone signals. Further, in the case where a plurality of characters and the corresponding operation of each character are stored in the memory section 52 of the automatic answering server 5, the receiving terminal equipment 4 selects a character and a combination of operations of the characters, to determine the response animation. In these cases, the user on the receiving terminal equipment 4 may select the response animation indicated from the automatic answering server 5, or characters as indicated or operations are combined to determine the response animation. As a result, a response animation can be determined without preparing each frame of animation, thereby significantly reducing troublesome jobs required for preparing a response animation.

In the case where the automatic answering server 5 provided offers a response animation, character, etc., operations of response animation or characters are stored in the memory section 52 of the automatic answering server 5, and the response animation of each user is stored as data specifying a combination of character and an operation. As a result, as compared to the case of storing the response animation of each user as a data string indicative of each frame, the capacity of the memory section 52 can be reduced. Furthermore, as compared to the case of separately providing a server which offers a response animation, a character, etc., for the creation of the animation, the memory capacity required for the entire communications system 1 can be reduced.

Further, the automatic answering server 5 offers response animation or character, etc., and it is more desirable to arrange such that the receiving terminal equipment 4 be provided with a display processing section to be communicated with the automatic answering server 5, for example, to receive a static image indicative of a combination of characters and operations of the characters, or animation itself. As a result, a user of the receiving terminal equipment 4 can recognize the response animation to be selected in more appropriate manner.

In the above example, explanations have been given through the case where the receiving terminal equipment 4 registers a response message such as a response animation or a voice response message, etc. However, as illustrated in Figure 1, it may be arranged such that other information apparatus 7 such as a personal computer capable of processing an image registers a response message. In this case, the telephone number (the number of the user) of the receiving terminal equipment 2 transmits from the information apparatus to the automatic answering receiving server 5. Here, in order to prevent unfair use, it is preferable that the registration section 55 of the automatic answering server 5 verifies the information apparatus 7, for example, by requesting a transmission of a password.

Here, the information apparatus 7 is generally provided with a large display screen as compared to the receiving terminal equipment 4 serving as a portable telephone, and therefore, a suitable input device for the preparation of animation can be connected thereof, for example, a keyboard, a mouse, or a tablet, etc. Moreover, since the information apparatus 7 has a high computing power, the time required for the preparation of animation by the trial-and-error can be reduced. As described, the information apparatus 7 which is capable of preparing the animation with ease prepares response animation or a character or an operation itself for use in the preparation of the response animation to be registered, and therefore a more variety of response animations can be registered in accordance with the intended use of the user of the receiving terminal equipment 4.

### [SECOND EMBODIMENT]

In the above first embodiment, explanations have been given through the case where the automatic answering server 5 transmits a response animation instead of or in addition to a voice response message in the case where the call-out terminal equipment 2 is capable of displaying animation. However, when the terminal equipment 2 calls out the receiving terminal equipment 4 for communications, even if the response animation is transmitted, the user of the terminal equipment 2 may not notice the response animation. In particular, in the case where the terminal equipment 2 is held with its speaker at one's ear during conversations, and the display processing section 23 cannot be seen, like the case of carrying a portable telephone, it would be difficult for the user to notice a response animation.

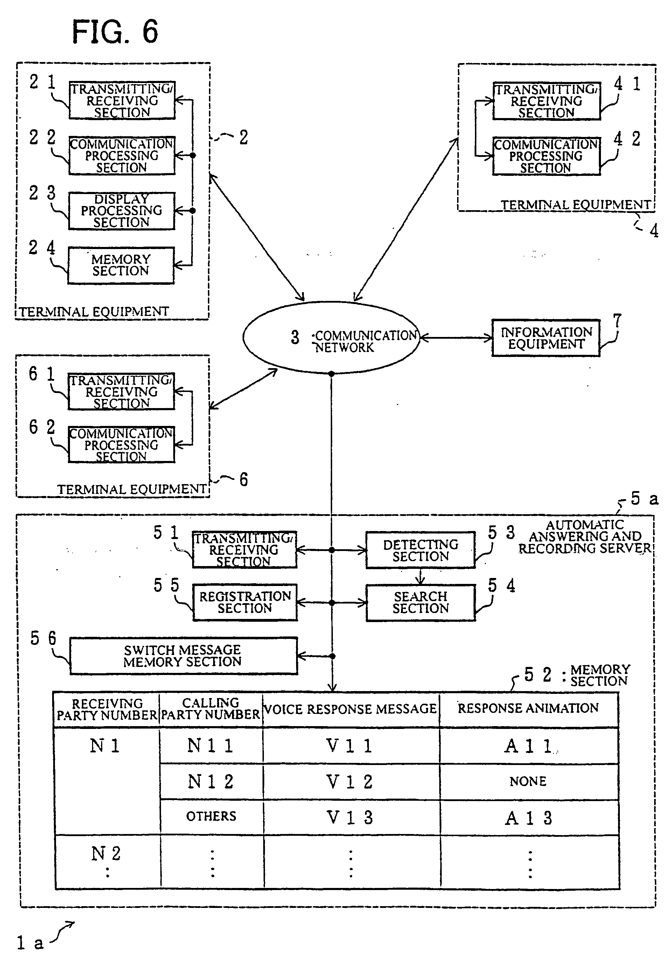

In response, as illustrated in Figure 6, the telephone server 5a in accordance with the present embodiment having the structure of the server 5 shown in Figure 1 is further provided with a switch message memory section 56. This switch message memory section 56 stores a voice message indicative of a transmission of response animation (switch message), for example, "animation is to be transmitted."

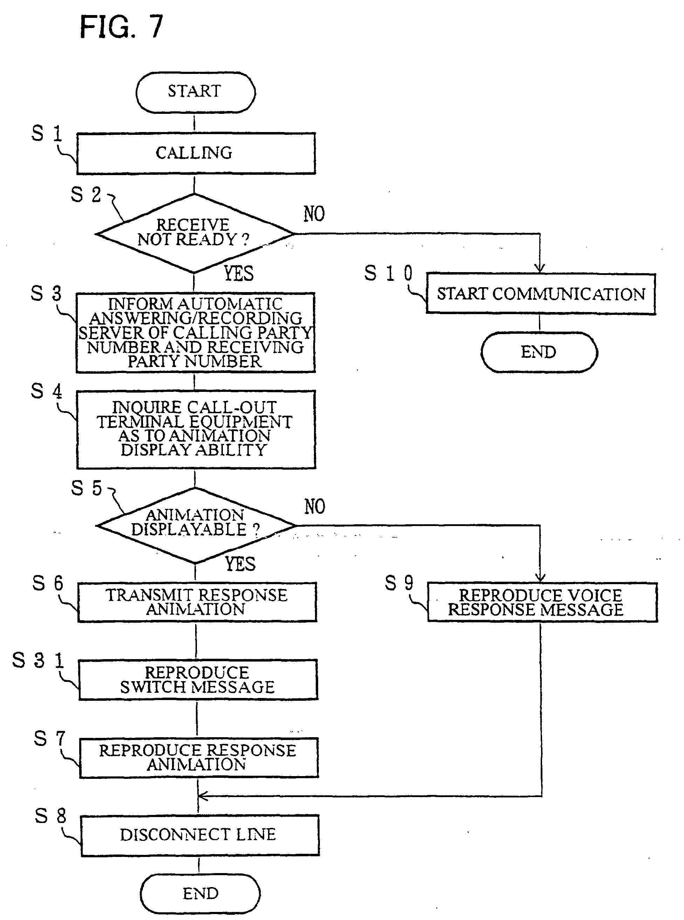

As illustrated in Figure 7, in the communications system 1a of the foregoing structure, in addition to the steps (S1) to (S10) shown in Figure 2, carries out a new step (S31) for transmitting a response animation before carrying out the step of reproducing the response animation (S7). The transmitting/receiving section 51 of the server 5a reproduces a switch message from the switch message memory section 56 to be transmitted to the terminal equipment 2. With this structure, even when the user is in the middle of conversation with the terminal equipment 2 which is held in the state where the display processing section 23 cannot be seen, the user of the terminal equipment 2 can recognize the receipt of the response animation by the switch voice message as received. As a result, the user can see the response animation for sure by changing the position of his hand holding the terminal equipment 2.

### [THIRD EMBDOIMENT]

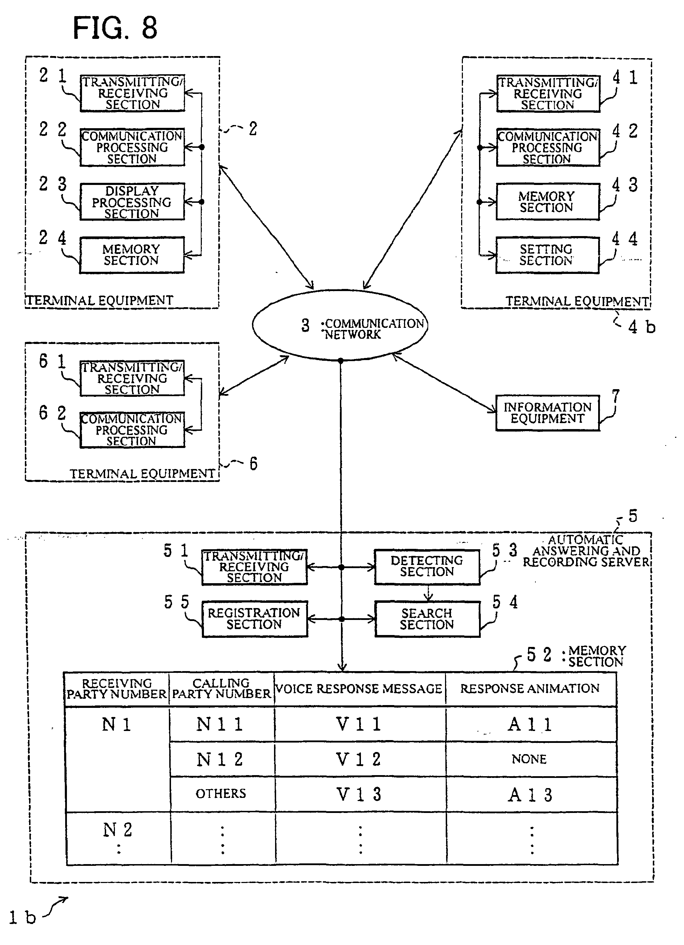

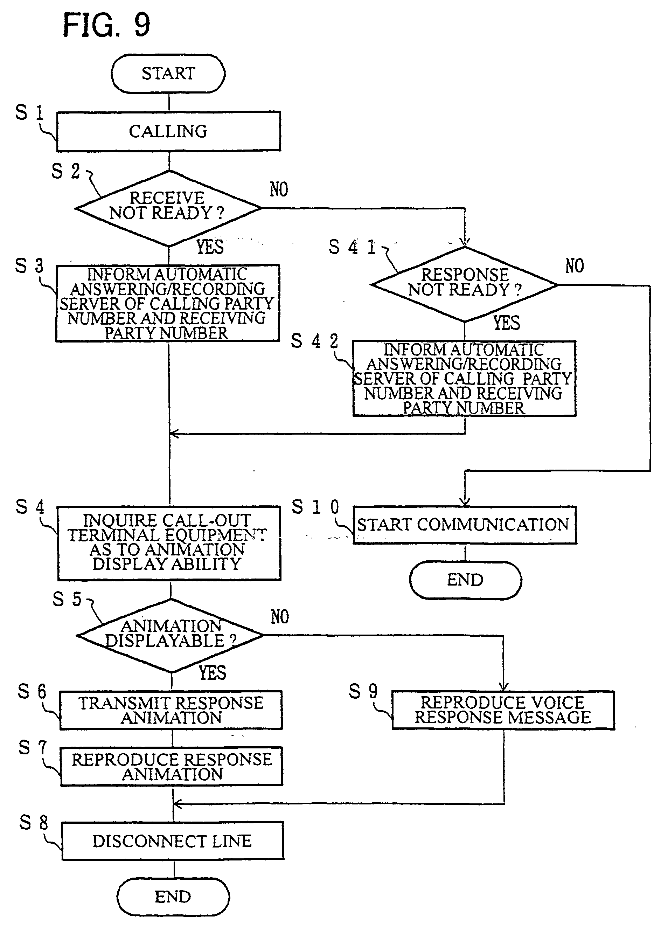

In each of the foregoing embodiments, explanations have been given through the case where the server 5(5a) responds only when the receiving terminal equipment 4 cannot receives a call. In contrast, according to the present embodiment, explanations will be given through the case where a communication system 1b capable of utilizing an automatic answering server provided with a server even when the call-out terminal equipment 4 is in the region within communication range in reference to Figures 8 and 9. The foregoing structure is applicable to both the first embodiment and the second embodiment. In the following, however, explanations will be given through the case of applying the above structure to the first embodiment.

Namely, as illustrated in Figure 8, the receiving terminal equipment 4b of the communications system 1b in accordance with the present embodiment having the structure of Figure 1 further includes a memory section 43 for storing data indicating whether or not the automatic answering server 5 is used when the receiving terminal equipment 4 is in the region within communication range, and a setting section 44 for setting the data, for example, based on a user's instruction.

According to the foregoing structure, in addition to the steps S1 to S10 shown in Figure 2, as illustrated in Figure 9, the steps S41 and S42 are carried out for determining whether or not the receiving terminal equipment 4b is capable of responding to a call as received. Namely, in the case where the setting for utilizing the automatic answering server 5 is stored in the memory section 43 of the receiving terminal equipment 4, when the receiving terminal equipment 4b receives a call (NO in S2), the transmitting/receiving section 41 of the receiving terminal equipment 4b informs the user of the receipt of a call, for example, by ringing a call-receiving bell a predetermined number of times. Then, upon responding to the call by the user, for example, by depressing a communication button (NO in S41), normal communications start between the communication processing section 42 of the receiving terminal equipment 4b and the communication processing section 22 (62) of the call-out terminal equipment 2(6).

On the other hand, for example, when the user cannot respond, for example, while driving a car, etc., (YES in S41), in S42, the transmitting/receiving section 41 transmits the calling party number and a self number (call-receiving number) as well as the setting in the memory section 43 to the predetermined automatic answering server 5, and the line connection from the call-out terminal equipment 2(6) to the automatic answering server 5. Thereafter, in the automatic answering server 5, the process in and after S4 is performed, and the automatic answering server 5 transmits a response animation or a voice response message according to the display ability of the call-out terminal equipment 2(6). Additionally, when the setting indicative of utilizing the automatic answering server 5 is not stored in the memory 43, the receiving terminal equipment 4b does not perform the processes in and after S42, and functions as the normal telephone machine without the answering machine.

According to the foregoing structure, in the case where the setting indicative of utilizing the automatic answering server 5 is stored in the memory section 43, when the receiving terminal equipment 4b cannot respond even in the region within communication range, the server 5 provided with the answering machine transmits a response message to the call-out terminal equipment 2(6). Therefore, the telephones server 5 provided with the answering machine can always respond to a call even when the user of the receiving terminal equipment 4b cannot receive/transmit a call.

### [FOURTH EMBDOIMENT]

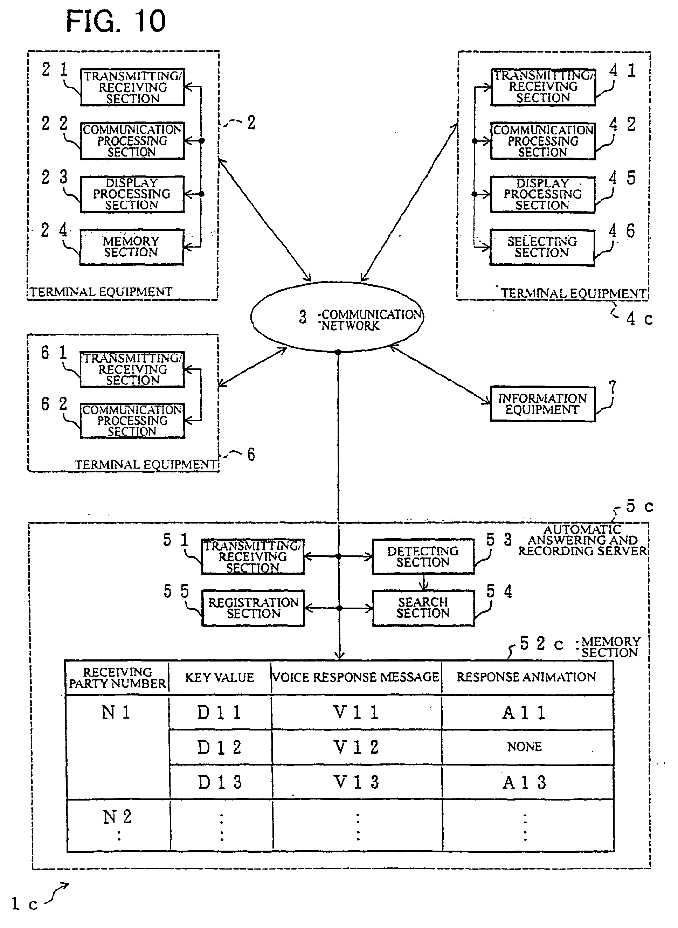

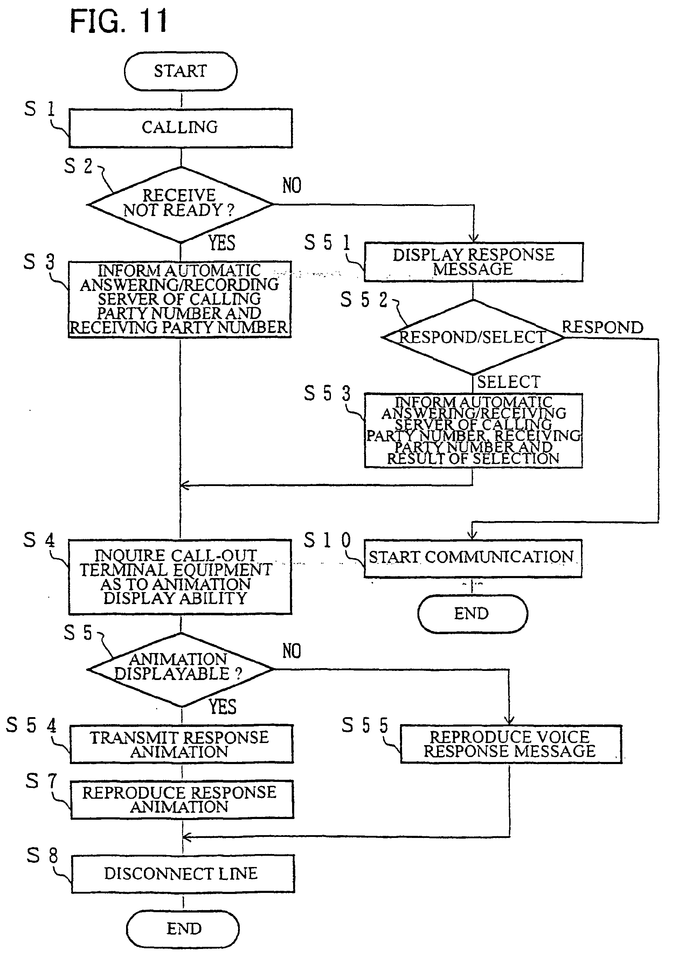

In the foregoing first through third embodiments, explanations have been given through the case where the response animation and the voice response message are stored in association with combinations of the receiving numbers and the calling numbers in the memory section 52 of the server 5 provided with the answering machine (5a). In response, explanations of the present embodiment will be explained where the response animation or the voice response message is selective by the user of the receiving terminal equipment 4(4b) in reference to Figure 10 and Figure 11. The foregoing structure is applicable to any of the first through third embodiments. In the following, however, explanations will be given through the case of applying the above structure to the first embodiment.

As illustrated in Figure 10, the server 5c of the communications system 1c in accordance with the present embodiment is provided with a memory section 52c in replace of a memory section 52 shown in Figure 1, and a plurality of combinations of response messages and key values are combined. Similar to combinations of calling party numbers and response messages, combinations of key values and response messages are stored beforehand from the receiving terminal equipment 4c or the information apparatus 7, such combinations are stored in the memory section 52c by the registration section 55 of the server 5c with the answering machine.

On the other hand, in the case where the receiving terminal equipment 4c cannot respond to a message as received, in order to permit the server 5c provided with the answering machine to select a response message to be responded by displaying an image indicative of a response animation which is transmittable, the receiving terminal equipment includes a display processing section (display means) 45 for urging the user to select a response message to be responded by the server 5c provided with the answering machine and a selecting section (selection means) 46 for receiving the result of selection made by the user and informing the server 5c provided with the answering machine.

According to the foregoing structure, in addition to the steps S1 to S10 shown in Figure 2, as illustrated in Figure 11, the steps S51 through S53 are carried out for urging the receiving terminal equipment 4c to select the response message to be transmitted to the user by the server 5c provided with the answering machine. Specifically, when the receiving terminal equipment 4c receives a call (NO in S2), the transmitting/receiving section 41 of the receiving terminal equipment 4c informs a user of a receipt of a message, for example, by ringing a bell a predetermined number of times. Further, the display processing section 45 of the receiving terminal equipment 4c provides a selectable response animation, for example, by displaying an image indicative of each response animation (SS1).

For example, in the case where the user responds (responding in S52) by depressing communications button, normal communications start between the communications processing section 42 of the receiving terminal equipment 4c and the communications processing section 22(62) of the calling out terminal equipment 2(6).

On the other hand, upon selecting a response animation indicated in S51 by a user's key input (when selecting in S52), the selecting section 46 of the receiving terminal equipment 4c transmits key values indicative of response animation as selected to the answering server 5c in addition to the respective numbers of the calling party and the receiving party. Further, the transmitting/receiving section 41 transfers a line connection from the call-out terminal equipment 2(6) to the server 5c provided with the answering machine. Thereafter, in the server 5c provided with the answering machine carries out steps in and after S4, and the automatic answering server 5c transmits a response animation or a voice response message according to the display ability of the call-out terminal equipment 2(6).

Incidentally, according to the present embodiment, in replace of steps 6 and 9, steps 54 and 55 are provided, and the search section (selection means) 54 of the server 5c provided with an answering machine obtains a response animation from the memory section 52c based on combinations between the receiving party number and the calling party number, to be transmitted to the transmitting/receiving section 51.

Incidentally, in the foregoing example, explanations have been given through the case where by selecting the response animation by a key operation, key values specifying the response animation and the voice response message are determined. However, it may be arranged such that only the response animation is selected, and the voice response message searches in the same manner as the first embodiment based on the call-out number.

Similarly, in the above example, explanations will be given through the case where the memory section 52c of the automatic answering server 5c stores combinations of key values, response animation and voice response messages for all the responses. However, the present invention is not limited to the above, and, for example, it may be arranged so as to store combinations of the calling numbers and the call-receiving numbers as illustrated in Figure 1, to be used together with the selection based on a key value. In this case, for example, in the case of storing combinations with the calling numbers, the response animation is searched based on the calling number. On the other hand, when the combinations with the calling numbers are not stored, it may be arranged so as to search the response animation based on a key value only for a predetermined specific calling number.

In any case, according to the foregoing structure, based on a key operation when the receiving terminal equipment 4c receives a call, a response animation can be selected. Therefore, as compared with the case of setting the response animation beforehand, the automatic answering server 5c can transmit response animation more suited for the state of the user of the receiving terminal equipment 4c at the time of receiving a call.

In the present embodiment, explanations will be given through the structure wherein the receiving terminal equipment 4c is provided with a display processing section 45, and options are displayed. However, the present invention is not limited this, and, for example, it may be arranged such that a user stores a value specifying a each response animation (for example, a key value, etc.), and the value is directly input, and the selecting section 36 instructs a transmission of a key value based on the value specifying each response animation. However, when registering a large number of response animations as the object to be selected in the memory section 52c of the server 5c with the answering machine to be applicable to a variety of situations, as the registered number of response animations as the object to be selected increases, it is difficult for the user to memorizes a value indicative of each response animation. In contrast, according to the present embodiment, in the case where the options are displayed in the display processing section 45, it is not necessarily for the user to store the above value, and therefore even when the registered number of options increases, the burden of the user can be reduced.

In some cases, the user can receive a call but cannot respond to the call, for example, during a meeting, or in the means of transportation. Under such circumstances, it is difficult to provide options by a voice message, or an instruction by a voice message. In particularly, for the portable telephones, in order to hear a message without the problem of leaking sound to the outside, the user needs to put his/her hand over his/her ear, which is relatively a large action to hear the message, which is difficult to be performed during the meeting.

In response, according to structure of the present embodiment wherein options are displayed in the display processing section 45, it is possible to select among displayed options without disturbing surroundings nor requiring a large action. Additionally, both the response animation and the image display are both image data (stimulus to vision), each response animation can be offered more accurately as compared to the case of adopting other expression method using voice or character, and the user can select a response animation in more accurate manner.

### [FIFTH EMBDOIMENT]

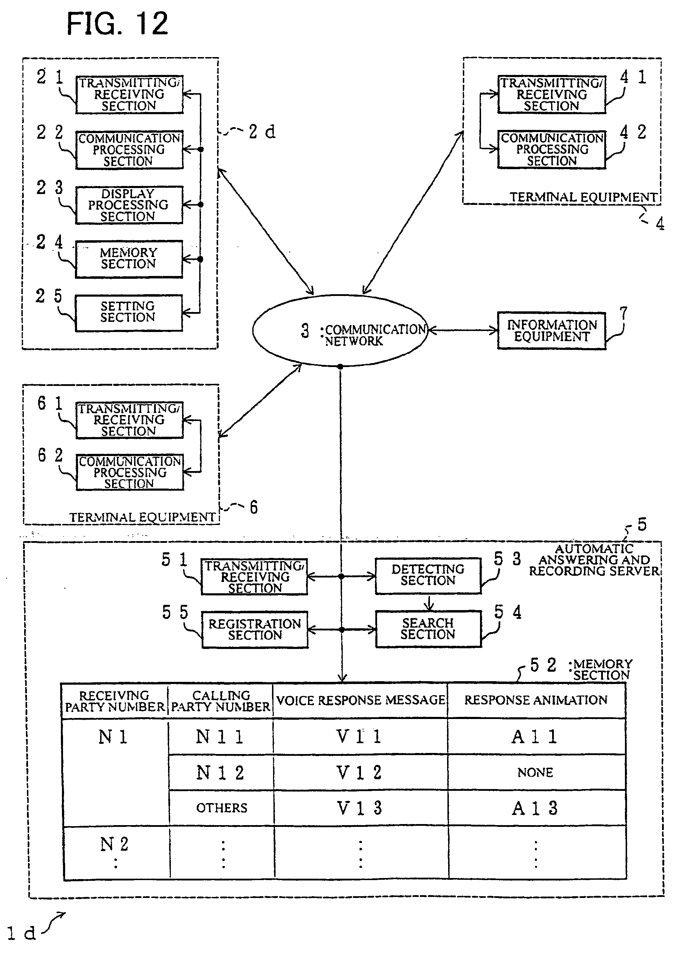

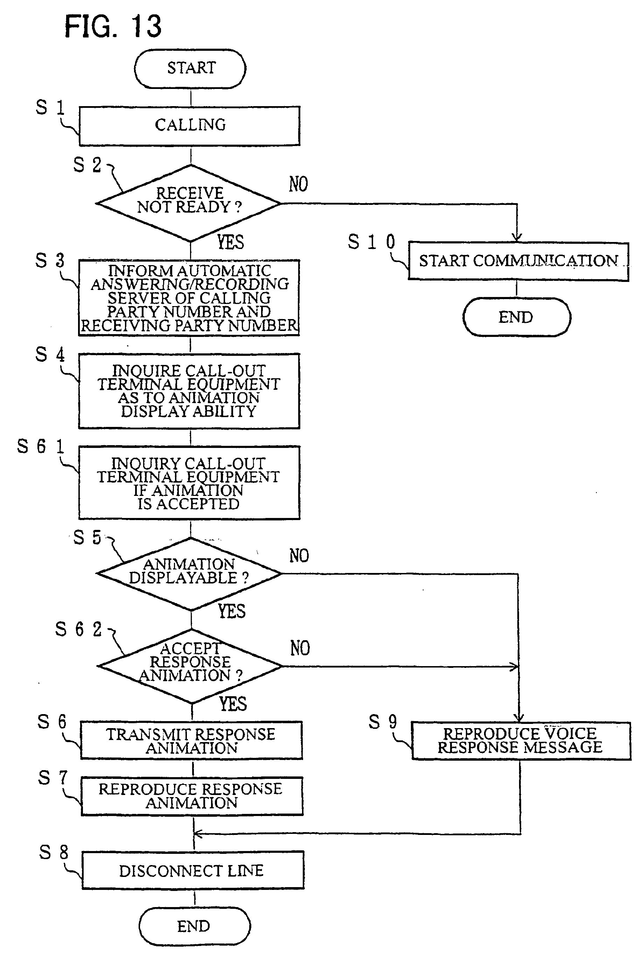

In the foregoing first through fourth embodiments, explanations have been given through the case where the call-out terminal equipment 2 is provided with the animation display function, the automatic answering server 5 (5a, 5c) automatically transmits a response animation. In contrast, in the present embodiment, explanations will be given through the case of selecting whether or not the response animation is to be received on the call-out side in reference to Figure 12 and 13. In the present embodiment, explanations will be given through an application to the first embodiment.

Specifically, as illustrated in Figure 12, the call-out terminal equipment 2d of the communications system 1d in accordance with the present embodiment has substantially the same structure as that of Figure 1 except for the following. That is, in the memory section 24, stored is data indicative of whether or not a response animation is accepted, and, a setting section 25 is further provided for setting the data, for example, according to a user's key input.

According to the foregoing structure, in addition to the steps S1 to S10 shown in Figure 2, as illustrated in Figure 13, the steps S61 and S62 are carried out for determining if the call-out terminal equipment 2d accepts response animation. Namely, when the automatic answering server 5 inquires the call-out terminal equipment 4d in S4, the server 5 inquires in S61 if the response animation is to be accepted. On the other hand, the transmitting/recording section 21 of the call-out terminal equipment 2d responds the data indicative of accepting or rejecting animation data together with the animation displayable notification.

From the terminal equipment 2, even when the automatic answering server 5 receives animation displayable notification from the terminal equipment 2 (YES in S5), if the server 5 does not receive the acceptable notification (NO in S62), the process in and after S9 is performed as in the case where the call-out terminal is not provided with the animation display function, and a voice response message is transmitted.

In contrast, when the automatic answering server 5 receives both the animation displayable notification and the acceptable notification (YES in S5 and S62), the automatic answering server 5 carries out the steps in and after S6 and transmits the response animation.

According to the foregoing structure, even when the call-out terminal equipment 2d can display animation, if the memory section 24 is not arranged so as to accept the animation beforehand, the automatic answering server 5 does not transmit the response animation. In this way, it is possible to transmit the response animation only when desired by the user of the call-out terminal equipment 2d, and a number of times of transmitting the response animation can be reduced as compared to the structure wherein the response animation is always transmitted when the call-out terminal equipment 2 is capable of displaying animation. As described, a number of times of transmitting a response animation, which takes time for transmitting and reproducing as compared to a voice response message, can be reduced, a burden of the communication network 3 can be reduced.

### [SIXTH EMBDOIMENT]

In the foregoing first through fifth embodiments, explanations have been given through the case where the automatic answering server 5 transmits response animation or a voice response message. However, it may be arranged such that the automatic answering server 5 receives a message from the call-out terminal equipment after the transmission. In the present embodiment, explanations will be given through an application to the first embodiment.

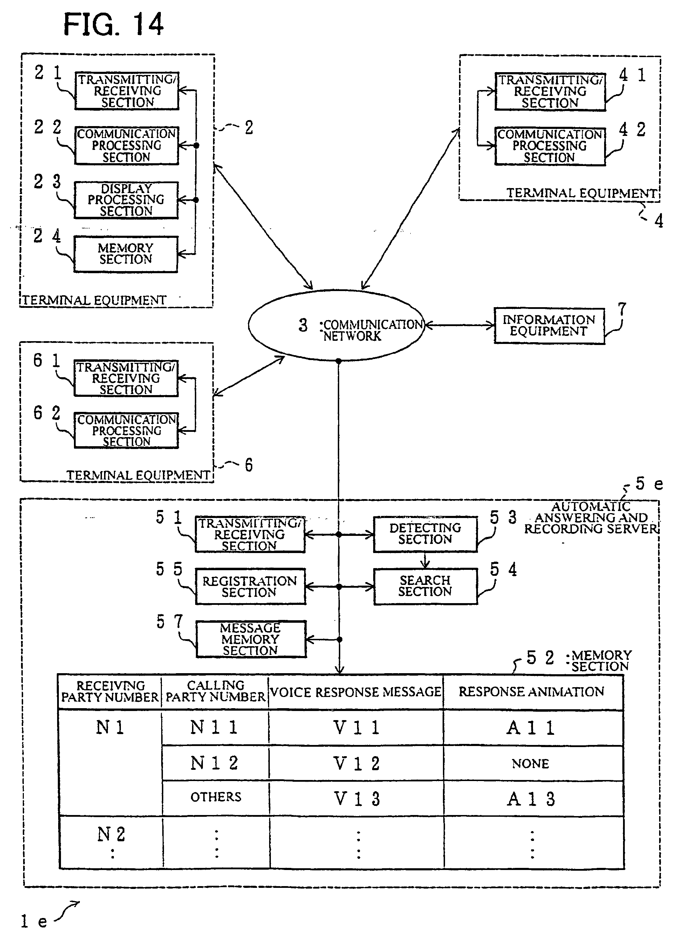

Specifically, as illustrated in Figure 14, the automatic answering server 5e in accordance with the present embodiment having the structure of Figure 1 is further provided with a message memory section 57 for storing voice or animation from the call-out terminal equipment 2(6) when transmitting the response animation or the voice response message.

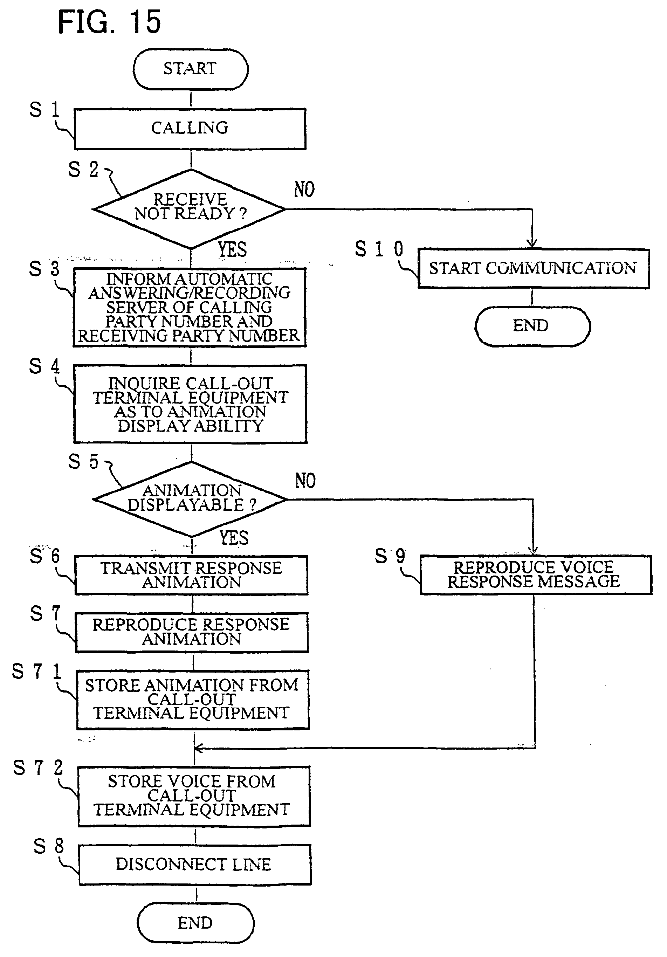

As illustrated in Figure 15, the communications system 1e having the foregoing structure carries out the steps in and after S71 and 72 in addition to each of the steps 71 and 72 before carrying out the line disconnection (S8). Namely, in S71, upon receiving animation from the call-out terminal equipment 2, the transmitting/receiving section 21 of the automatic answering server 5e stores the animation in the region ensured for the receiving party of the animation memory region of the message memory section 57. On the other hand, in S7, upon receiving a voice message from the call-out terminal equipment 6 or the terminal equipment 2, the voice message is recorded in the region ensured for the receiving person of the voice memory region of the message memory section 57. Incidentally, in order to specify the calling party or the situation when receiving a call, it is desirable to store the animation or the voice message with the response time or the calling party number.

### [SEVENTH EMBDOIMENT]

In the foregoing first through sixth embodiments, explanations have been given through the case where the automatic answering server 5 inquires the call-out terminal equipment 2(6) to recognize whether or not the animation display function is provided, or whether or not the animation is accepted.

In contrast, according to the present embodiment, explanations will be given through the case where the call-out terminal 2 automatically transmits data indicative of with/without animation display function, or with/without animation acceptance permission when calling.

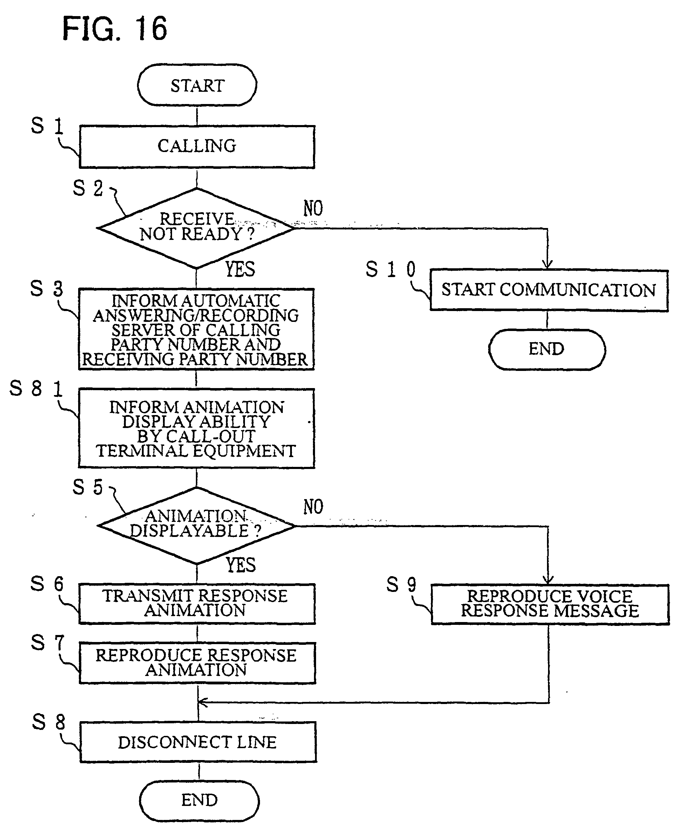

In its application to the first embodiment, as illustrated in Figure 16, in the present embodiment, S81 is carried out in replace of S4. Specifically, the automatic answering server 5 is informed of that the data indicative of that the call-out terminal equipment 2 is provided with the animation display function in S81, the server 5 determines that the terminal equipment 2 is provided with the animation display function based on the data as received. On the other hand, in the present embodiment, since the terminal equipment 6 without being provided with the animation display function does not transmit the above data, the automatic answering server 5 determines that the terminal equipment 6 is not provided with the animation display function is based on that the above data is not received. Here, it may be arranged such that the terminal equipment 6 transmits the data indicative of that the animation display function is not provided, and the automatic answering server 5 determines based on the data as received. However, in order to adopt this arrangement, it is required to modify the operations of the conventional terminal equipment 6, and therefore, the former structure of determining that the animation display function is not provided when the data indicative of being provided with the animation display function is preferable.

In each of the foregoing embodiments, explanations have been given through the case where the automatic answering server (5...) inquires the call-out terminal equipment (2..., 6) if the animation display function is provided. However, it may be arranged such that the automatic answering server (5...) inquires the call-out terminal equipment (2..., 6) not only if the animation display function is provided but also the number of pixels of display screen, the number of displayable gradations, tones, or the arithmetic ability, displayable graphic elements, the display ability of the call-out terminal, etc. In this case, the automatic answering server converts the format of the response animation in accordance with the display ability of the call-out terminal equipment. In this case, the automatic answering server converts the response animation format in accordance with the display ability of the call-out terminal equipment. In the case where the frame of the response animation is expressed by the bit map image, the process of format conversion includes the step of altering the resolution and tones of individual bit mapped images, the step of interpolating the bit mapped image to be transmitted per unit time. In the case where each frame is composed of a graphic element, a graphic element or an attribution of a graphic element (color, size, line thickness, etc.) alters by replacement or deletion, etc., so that the graphic elements which constitute each frame are limited to the graphic elements displayable by the call-out terminal. Further, in the case of reproducing the animation by interpolating the frame between key frames, the process of format conversion includes the step of interpolating frames between key frames. By carrying out these steps in the conversion process by the automatic answering server which relatively affords the arithmetic ability, as compared to the case of performing the conversion steps by the portable terminal equipment whose arithmetic ability is limited by giving weight to the portability, the burden of the terminal equipment can be reduced. As a result, a still smoother animation display can be realized by a terminal equipment of relatively low terminal equipment.

In each of the embodiments, explanations have been given through the case where the automatic answering server is provided separately from the receiving terminal equipment; however, it may be arranged such that the receiving terminal equipment serves also as the automatic answering server. In this way, since then user (receiving party) is limited, it is possible to omit the calling party number from the memory section 52 (52c). It should be noted; however, as long as the call-receiving terminal and the automatic answering server are provided separately, even when the receiving terminal equipment cannot be connected to the communication network, the receiving terminal equipment can respond. Incidentally, in replace of adopting the structure wherein the receiving terminal equipment responds only when the receiving terminal equipment cannot receive a call or responds, by arranging not only responding by adopting the structure wherein the receiving terminal equipment always responds, the foregoing structure can be applied to a variety of responders.

In each of the foregoing embodiments, each member which constitutes terminal equipments 2, 4, 6, or automatic answering server 5 may be a functional block realized by executing a program stored in a recording medium such as RON, RAM, etc., by arithmetic means such as CPU, etc., or hardware which performs a similar process. Alternately, it may be arranged such that each member which constitutes terminal equipments 2, 4, 6, or server 5 may be constituted by a combination of a hardware which performs a part of the process, or the arithmetic means which executes the remaining processes of the program. Further, the arithmetic means may be a single member, or a plurality of arithmetic means connected via a bus within the device or a variety of communications paths.

The program is executed by the arithmetic processing means in the following manner. First, a program itself, or program data indicative of data for use in the preparation of the program is stored in a recording medium, and the recording medium is distributed, or the program data is distributed, for example, by transmitting the program data by wired line or wireless line or other communication means.

It is preferable that a recording medium for use in providing the program data be detachable. As to the recording medium after providing the program data, however, whether the recording medium is detachable or not does not matter. As long as the program data is stored in the recording medium, whether or not the recording medium is writable, volatile does not matter, and also, the method of recording the program data, or the structure of the recording medium are not particularly specified. Examples of the recording medium include: a tape such as a magnetic tape, a cassette tape, a disk such as a floppy disk, a hard disk, or other magnetic disk, a CD-ROM, a magneto-optical disk (MO), a mini-disk (MD), a digital video disk (DVD), etc. The recording medium may be a card such as an IC card, an optical card, a semiconductor memory such as a mask ROM, EPROM, EEPROM, or flash ROM, etc.

The foregoing program data may be codes for use in instructing the arithmetic processing means all the steps in each process, or if a basic program (operating system or library, for example) executable a part of or all the steps in each process b7 calling in a predetermined order, a part of all the steps may be replaced with codes or a pointer for use in instructing the calling out of the basic program in the arithmetic means.

For the format for storing the program data in the recording medium, i) storing system which permits the arithmetic means to access to be executable as in the mounted state in real memory, ii) a storage system before mounting in a real memory, or after installing in a local recording medium always (real memory, hard disk, etc.) which is always accessible, or iii) a storing system before installing from a network or a transportable recording medium in the local recording medium. Here, the program data is not limited to object codes after being complied, or source codes, or may be stored in intermediate codes to be prepared in the process of being interpreted or complied. Anyway, the effects of the present invention can be achieved as long as the program data can be converted to be executable by the arithmetic means by combining processes of decompressing, decoding, interpreting, compiling, linking or placing in real memory, etc., irrespectively of the system of storing the program data in the recording medium.

The invention being thus described, it will be obvious that the same may be varied in many ways. Such variations are not to be regarded as a departure from the spirit and scope of the invention, and all such modifications as would be obvious to one skilled in the art intended to be included within the scope of the following claims.

### INDUSTRIAL APPLICABILITY

When a user of a receiving terminal equipment cannot receive a call, if a call-out equipment is provided with a display ability, an image response message is transmitted instead of or in addition to a voice response message. As a result, in the communication system wherein both an equipment provided with a display function and an equipment without being provided with a display function can be connected to a communication network, a responder of the present invention can transmit the response animation only to the call-out equipment provided with the display function. As a result, more advanced data transmission is enabled only to the call-out equipment provided with the display function in response to the response animation without unnecessary increasing the amount of data to be transmitted in the communication network. Further, irrespectively of with or without the display function, the call-out equipment becomes capable of receiving a response message according to the function, i.e., with/without the display function only by calling the receiving equipment by the call-out equipment.

## Claims

1. A responder which includes acceptance means for accepting a call from a call-out equipment in a predetermined receiving equipment, and response means capable of transmitting a voice response message to said call-out equipment when the call is accepted, wherein:
when said call-out equipment is provided with a display function, said response means transmits an image response message to said call-out equipment instead of or in addition to the voice response message.

2. The responder as set forth in claim 1, comprising:
inquiry means for making an inquiry about a display ability of said call-out equipment when said acceptance means accepts the call, wherein:
when said response means receives a response to the inquiry that said call-out equipment is provided with a display function, said response means transmits an image response message to said call-out equipment instead of or in addition to the voice response message.

3. The responder as set forth in claim 1, wherein:
upon accepting the call, said acceptance means receives data indicative of the display ability as informed from said call-out equipment; and
said response means transmits to said call-out equipment an image response message instead of or in addition to the voice response message when receiving the data indicative of that the display function is provided.

4. The responder as set forth in claim 1, wherein:
when transmitting an image response message, the response means informs said call-out equipment of the image response message by transmitting thereto a predetermined voice notice message.

5. The responder as set forth in claim 1, wherein:
when transmitting the image response message, the response means confirms the call-out equipment if it is set to accept the image response message, and transmits the image response message only when the call-out equipment is set so.

6. The responder as set forth in claim 1, comprising:
selection means for selecting an image response message to be used for a response to a currently received message among predetermined plural image response messages based on a result of selection made by a user of said receiving equipment, wherein:
said response means transmits to said call-out equipment an image response message as instructed by said selection means among said plural image response messages.

7. The responder as set forth in claim 6, wherein:
said responder is said receiving equipment, said responder, further comprising:
display means for displaying an image indicating the user of each of the plural image response messages and urging the user to select an image response message to be responded.

8. The responder as set forth in claim 1, wherein:
said responder is an automatic answering server which transmits a voice response message or an image response message to said call-out equipment instead of said receiving equipment when said receiving equipment cannot receive or respond a call,
said responder, further comprising:
voice message memory means for storing a voice response message by making an association beforehand with said receiving equipment;
image message memory means for storing an image response message by making an association beforehand with said receiving equipment; and
response instruction means for instructing said response means to respond when said receiving equipment provided with said acceptance means which accepted the call cannot receive or respond, wherein:
said acceptance means can be connected to the communication network any time; and
said response means makes an access to said voice message memory means when transmitting the voice response message, and makes an access to said image message memory means when transmitting the image response message, in order to read out the response message in association with the receiving equipment which accepted the call, and transmits the response message as read to said call-out equipment.

9. A communication device capable of communicating with a responder via a communication network as a receiving equipment, wherein said responder includes:
acceptance means for accepting a call from a call-out equipment in a predetermined receiving equipment;
response means capable of transmitting a voice response message to said call-out equipment when the call is accepted; and
selection means for selecting an image response message to be used for a response to a currently received message among predetermined plural image response messages based on a result of selection made by a user of said receiving equipment, wherein when said call-out equipment is provided with a display function, said response means transmits the image response message as selected by said selection means to said call-out equipment instead of or in addition to the voice response message, said communication device, comprising:
display means for displaying an image indicating the user of each of the plural image response messages and urging the user to select an image response message to be responded; and
instruction means for indicating a result of selection to said selection means.

10. A recording medium for recording thereon a program for operating a computer capable of communicating with a call-out equipment via a communication network, said recording medium storing a program for operating the computer as:
acceptance means for accepting a call from a call-out equipment in a predetermined receiving equipment;
inquiry means for making an inquiry about a display ability of said call-out equipment when said acceptance means accepts the call; and
response means which transmits an image response message upon receiving a response indicative of that the display function is provided, and transmits a voice response message upon receiving a response indicative of that the display function is not provided.

11. A recording medium for recording thereon a program for operating a computer capable of communicating with a call-out equipment via a communication network, said recording medium storing a program for operating the computer as:
acceptance means for accepting a call from a call-out equipment in a predetermined receiving equipment; and
response means which transmits an image response message instead of or in addition to the voice response message upon receiving a response indicative of that the display function is provided, and transmits a voice response message upon receiving a response indicative of that the display function is not provided.

12. A program for operating a computer capable of communicating with a call-out equipment via a communication network, as:
acceptance means for accepting a call from a call-out equipment in a predetermined receiving equipment; and
response means which transmits an image response message instead of or in addition to the voice response message upon receiving a response indicative of that the display function is provided, and transmits a voice response message upon receiving a response indicative of that the display function is not provided.
